Europäisches Patentamt

European Patent Office

Office européen des brevets

(19)

(11) Publication number: **0 237 229**
**A1**

(12) **EUROPEAN PATENT APPLICATION**

(21) Application number: **87301618.2**

(22) Date of filing: **24.02.87**

(51) Int. Cl.³: **H 04 N 7/137**

(30) Priority: **26.02.86 GB 8604702**

(43) Date of publication of application:
**16.09.87 Bulletin 87/38**

(84) Designated Contracting States:
**AT BE CH DE ES FR GB GR IT LI LU NL SE**

(71) Applicant: **BRITISH TELECOMMUNICATIONS plc**
**British Telecom Centre 81 Newgate Street**
**London EC1A 7AJ(GB)**

(72) Inventor: **Nightingale, Charles**
**39, Quilter Road**
**Felixstowe Suffolk(GB)**

(74) Representative: **Lloyd, Barry George William et al,**
**Intellectual Property Unit British Telecom Room 1304 151**
**Gower Street**
**London WC1E 6BA(GB)**

(54) **Encoding images.**

(57) Actual picture points of a picture area are compared with interpolated values derived from selected points. If the differences are small, data for only the selected points are transmitted, otherwise the area is subdivided into two triangular sub-areas and each sub-area processed in the same way, so that the number of points selected for transmission is greatest in detailed areas of the image.

FIG.1

FIG.2

FIG.3

FIG.4

EP 0 237 229 A1

# ENCODING IMAGES

The present invention concerns methods and apparatus for image coding and transmission.

The proposals are suitable for the coding of both still pictures and moving pictures, and are particularly, though not exclusively, aimed at low bit rate video coding schemes for applications such as photovideotex and video conferencing.

They aim to reduce some of the drawbacks associated with transform coding whilst achieving a similar or better compression for a given picture quality.

In our co-pending UK patent application No:8502924, there is described a method of image transmission comprising repetitively:

(a)  generating an estimate of a picture area by interpolation from selected sample points thereof;

(b)  comparing the estimated samples with the actual samples;

(c)  if the estimated and actual samples differ by less than a threshold criterion, transmitting picture data and respect of the said selected sample points, and if they do not, notionally dividing the area under consideration into two or more sub-areas and subjecting each sub-area to steps (a), (b) and (c) until a minimum sub-area size is reached; and also a transmitter for such transmission may comprise interpolation means for generating an estimate of a picture area based on a subset of its samples, means for comparing the estimate with the actual sample values, and means arranged in dependence on whether the comparison indicates a difference of more or less than a threshold (a) to select the subset of samples for transmission or (b) to notionally divide the picture area into two or more sub-areas and to process each sub-area in like manner; and a decoder for use therewith.

The present invention concerns such a method in which each division is into two triangular sub-areas.

A prefered embodiment of the invention includes the step of, for each triangular area which is to be divided, generating estimates for the pairs of sub-areas resulting from respective ones of the three possible divisions of that area, comparing the actual and estimated samples to obtain a measure of the difference therebetween in one or both sub-areas for each division, and selecting that division which corresponds to the smallest measure.

As before, the interpolation process may be simple two-dimensional linear interpolation, but this is not essential.

The data transmitted may comprise a sequence of division codes each indicating whether or not the corresponding area is divided; each division code being followed by the codes corresponding to parts of the respective one. In one preferred arrangement the sample point picture data are transmitted in groups of one or more samples, each group containing data in respect of the untransmitted selected sample(s) of a respective area, the sequence of groups being the same as that of the division codes which indicate that the relevant areas are undivided, whilst in another the sample point picture data are transmitted in groups, each group containing data in respect of those selected samples generated by a respective division, the sequence of groups being the same as that of the division codes which indicate the relevant division.

As indicated the invention may be applied directly to the coding of individual pictures. However, further economy in transmission may be combining it with inter-frame differential coding and applying the present coding method being applied to the difference signal (within the predictor loop).

It will be seen that the principle of the method is a non-uniform sample structure in which non-transmitted pels are interpolated.

It is based on the idea of avoiding the use of irrelevant block structures and frequency-derived transforms whose raisons d'etre are inappropriate mathematical models (Markov processes).

One embodiment of the invention will now be described with reference to the accompanying drawings, in which

Figure 1, 2, 3 and 4 illustrate diagrammatically an image area at various stages of the coding procedure;

Figure 5   is a flowchart for coder operation;

Figure 6   is a block diagram of a coder;

Figure 7   is a block diagram of a decoder;

Figure 8   is a flowchart for decoder operation;

Figure 9   is a block diagram of an inter-frame coder.

Operation 1

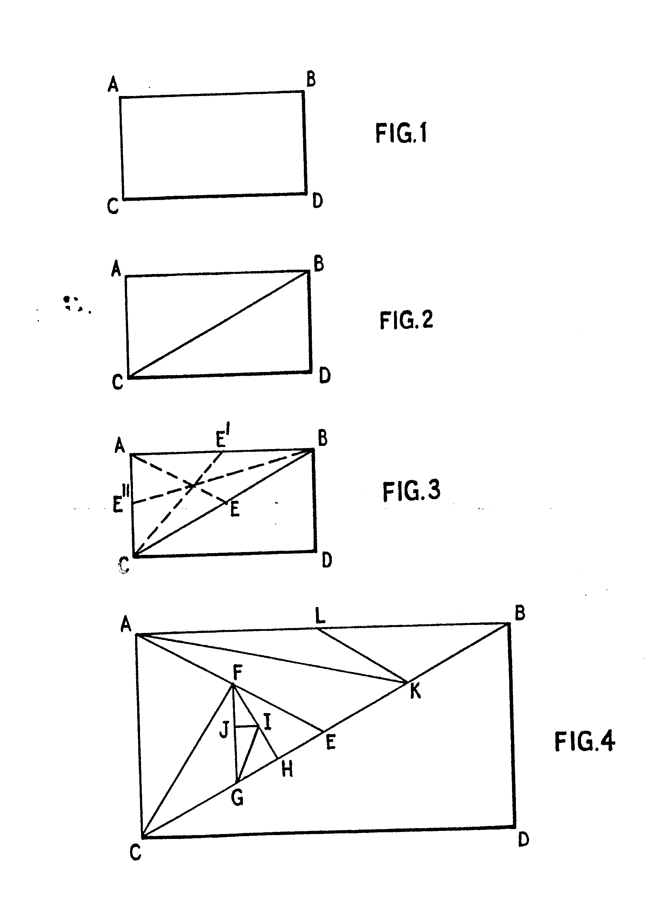

Referring to Figure 1, a block whose corner points are ABCD is schematically illustrated. The first step in coding is to calculate a new block in which all picture elements (pels) are represented by values linearly

**0237229**

interpolated from the corner values at A, B, C and D. This new block is compared with the orginal and if no differences are found in excess of a certain threshold, t, then the process moves to operation 2.

Operation 2

The addresses and values of the points A, B, C and D are transmitted. In the receiver the whole block can be reconstructed by interpolation from these points in the knowledge that the resulting block will be a good approximation to the original. If the picture includes more than one block the process then moves to a new block and repeats operation 1. Although the process may be started with the full frame as the first block so that large inactive blocks may be and often are transmitted, the process could, of course, start from an initial sub-division; initial subdivision of the block may be into triangles rather than rectangles.

In the case that differences found during operation 1 exceed the threshold t then operation 3 is performed.

Operation 3

The block ABCD is subdivided diagonally into two triangular areas as shown in Figure 2. This division generates no new corner points and thus, exceptionally, is always followed by further division.

There are two diagonals to choose from. If one option results in one triangular area which can be reprsented by interpolation between its corner points, then that one is selected. Otherwise the decision is arbitrary; although selection could be made on the basis of the magnitude of the extent to which the actual samples deviate from the interpolated estimate. Thus that

0237229

division which gives a triangle with a deviation better than either of those of the other division would be selected. Suppose B-C division is chosen. Operation 4 then follows

Operation 4.

Division of the triangle ABC can be carried out in 3 ways, as indicated by the dotted lines in Figure 3. It is assumed that each division line runs from an apex to the centre of the opposite side - each identifies one extra corner point, $E,E',E''$. Each division line is tried in turn, interpolation carried out and compared with the actual sample values. The choice among the three options is made as above - ie that division which gives rise to one (or possibly two) triangles requiring no further division is chosen.

Operation 3 is then repeated until a minimum triangle size is reached.

As the process proceeds a structure like that shown in Figure 4 will appear where the greatest number of sub-divisions wil occur at edges or over fine detail. It is noted particularly that the selection of the division options permits the direction of the division lines to "follow" lines of picture detail, thereby providing an efficient coding procedure.

The process may continue until sub-division is no longer necessary, or no longer possible, but if desired a minimum block size may be defined.

It may be supposed that the addressing overhead for such a scheme would be very large, even prohibitive, but this is not the case, and a system which fully expoints the highly recursive nature of the process and reduces the address data to approximately four bits per corner point will now be described.

Starting with the full frame ABCD (figure 1), 0237229 addresses of the corner points are known in advance by the receiver (or are transmitted if not known in advance). Operation 1 is then carried out. If it is decided that the block can be interpolated from its corner values, a "00" is transmitted. If it is decided that the block must be sub-divided (Figure 2), a "01" or "10"is transmitted according to the nature of the subdivision. The block is sub-divided into two by cutting it in half diagonally. Further subdivision (Figure 3) is encoded by transmitting 01, 10 or 11 according to the direction of the division. The block is divided by a line from one apex to the mid-point of the opposite side. In the drawing, it is assumed that the number '01' indicates a line from the upper (or upper left) apex and "10" "11" the others, moving clockwise. Therefore the transmission of the code is sufficient to determine the addresses of the new point E needed in the sub-division. (The lengths of the sides of the block do not need to be powers of 2, provided the receiver and transmitter use the same rule for dividing odd numbers by 2). The addresses of the corner points of the two new blocks are placed on a "stack" in a predetermined order (eg as indicated by "2, 1" in Figure 3, where 2 is at the top of the stack). Each layer of the stack consists of information on one block, its corner points and the values at those points.

The block at the top of the stack is now processed in exactly the same way. If the block can be interpolated then it is simply removed from the stack and the next block down is processed. If it has to be sub-divided it is removed from the stack and replaced by the two new blocks.

0237229

The receiver can work out, from the codes which are transmitted as above, the addresses of all the sample points and the order in which they are to be received. It works out that this addressing information is approximately one bit per sample point.

Transmission of the actual sample data may be interspersed with the sub-division information code sequence, or may follow it. It will be appreciated that the addressing scheme described establishes an order of priority of the blocks, and sample data conveniently can follow this order.

One possible method would be to transmit sample data for the corners of each triangle not sub-divided, (ie a set of data for each "00" of the sequence).

In some instances a triangle may abut one adjacent to it whose data have already been transmitted - or implied - so that no extra data needs to be sent.

Alternatively, data may be regarded as associated with the act of dividing a triangle into two ie one item of data for each 01, 10 or 11 of the sequence. This implies that A, B, C, D, have already been sent and that E is required.

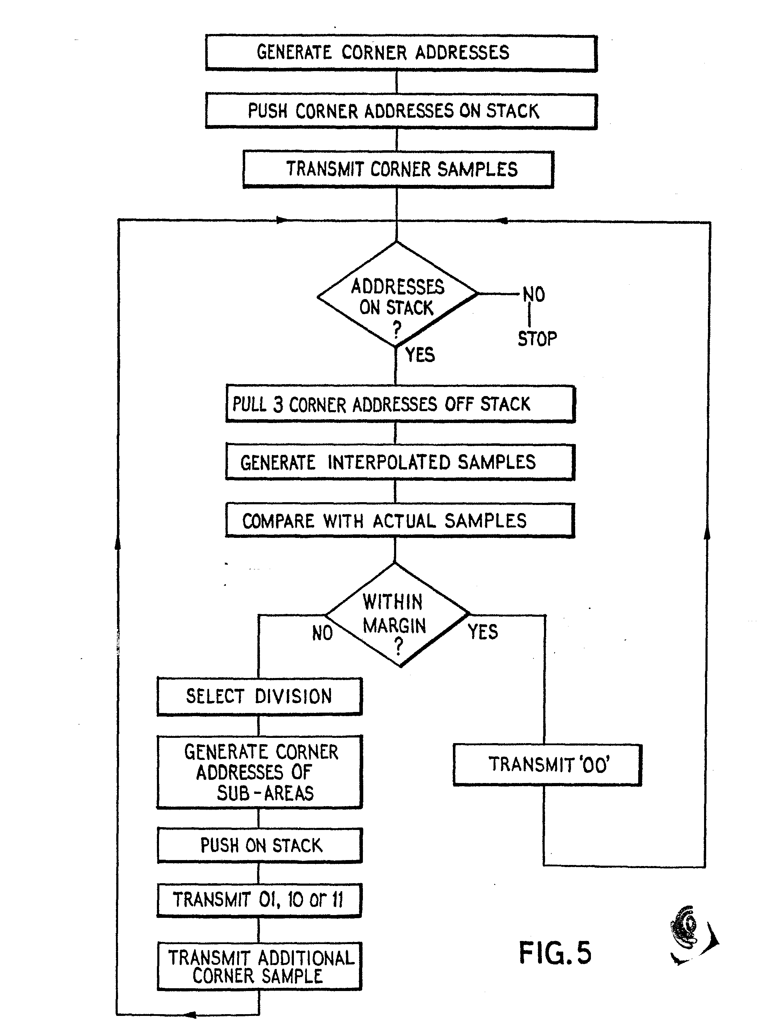

A transmitter for coding in accordance with these methods may comprise a frame store, means to enter image samples and processing means arranged to perform the coding. A flowchart for carrying out the second sequence mentioned above - starting from a triangular area - is shown in Figure 5. This could be carried out by a suitably programmed microprocessor, though for real-time processing of moving pictures, dedicated hardware would probably be necessary to achieve the desired speed of operation.

0237229

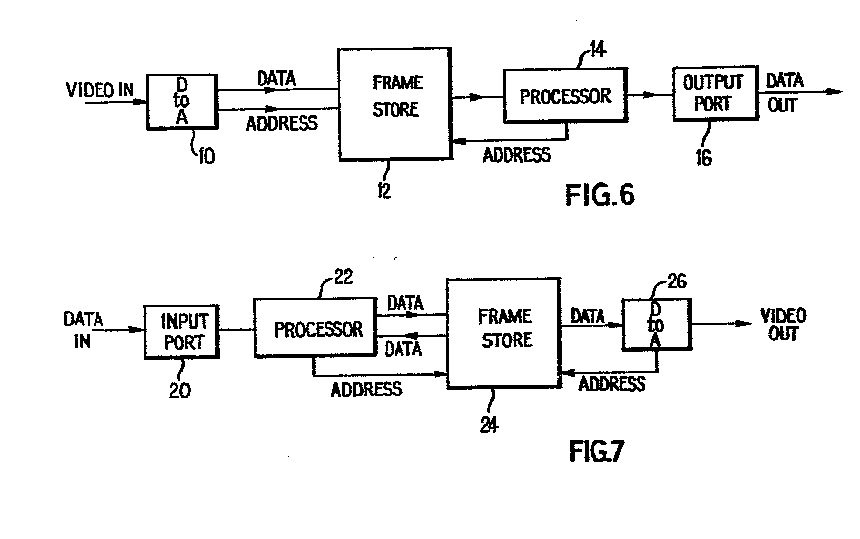

Figure 6 shows a coder with digital to analogue converter 10 (with address control), frame store 12, processor 14 and data output port 16.

The following table illustrates the coded output corresponding to the division shown in Figure 4. SA, SB etc. indicate sample values corresponding to points A, B etc. Each division codes corresponds to division (or otherwise) of the triangle whose address is shown at the top of the stack.

## TABLE

| TRANSMITTED | | STACK | | | | |
|---|---|---|---|---|---|---|
| CODE | DATA | TOP | | | | BOTTOM |
| 10 | | | | | | ABCD |
| 00 | | | | | BCD | ABC |
| 01 | SE | | | | | ABC |
| 11 | SF | | | | ACE | ABE |
| 01 | SG | | | CFE | ACF | ABE |
| 00 | | | CFG | EFG | ACF | ABE |
| 01 | SH | | | EFG | ACF | ABE |
| 11 | SI | | FGH | EFH | ACF | ABE |
| 00 | | GHI | FGI | EFH | ACF | ABE |
| 10 | SJ | | FGI | EFH | ACF | ABE |
| 00 | | GIJ | FIJ | EFH | ACF | ABE |
| 00 | | | FIJ | EFH | ACF | ABE |
| 00 | | | | EFH | ACF | ABE |
| 00 | | | | | ACF | ABE |
| 01 | SK | | | | | ABE |
| 00 | | | | | AEK | ABK |
| 11 | SL | | | | | ABK |
| 00 | | | | | AKL | BKL |
| 00 | | | | | | BKL |

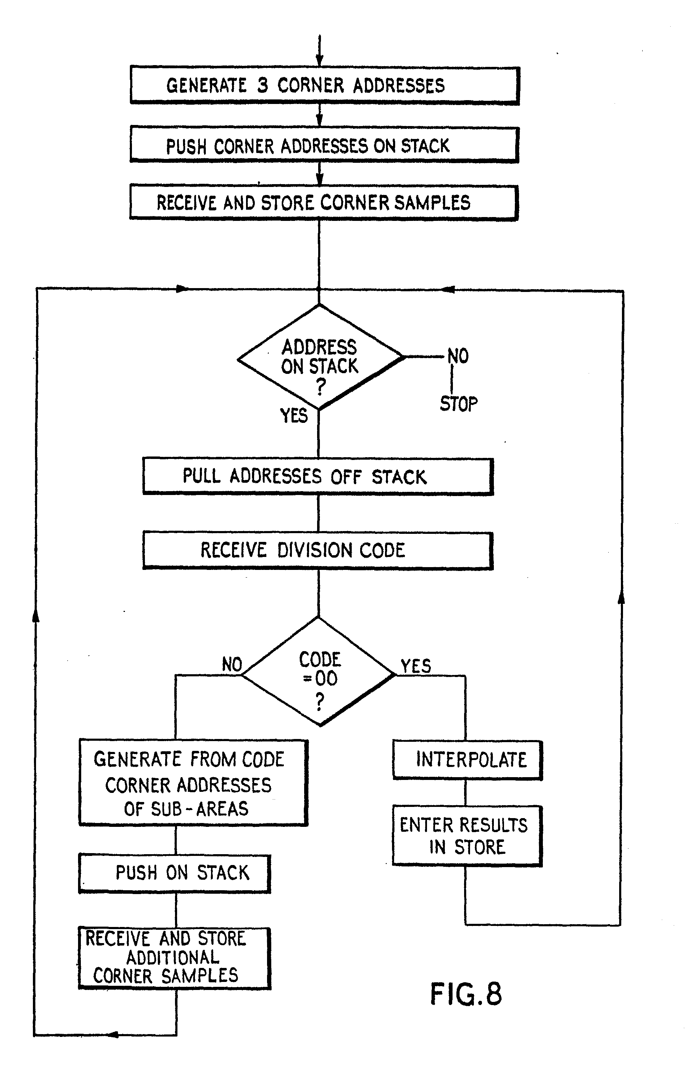

Figure 7 shows a receiver with data input port 20, processor 22, frame store 24 and output D to A converter (and address control) 26. Receiver operation is illustrated in the flowchart of Figure 8.

There are a number of methods of achieving and/or varying the degree of compression.

(a) The threshold may be increased so that larger blocks will be found to satisfy the criterion for transmission. This leads to fewer blocks and hence fewer corner points to be transmitted.

(b) The minimum allowable block size can be increased to prevent a myriad of very small blocks from being generated with consequent saving on transmitted points.

(c) The number of bits used to represent a transmitted corner value can be reduced since contouring (sudden steps in brightness) is impossible with a scheme based on interpolation.

(d) Some values may not need to be transmitted since they can be interpolated from already transmitted values.

(e) Other transmitted actual values can be replaced by differences between actual and interpolated values with consequent reduction of variance and decrease in the number of bits required for transmission of some corner points.

Apart from (d) these all introduce some degradation in picture quality, and their application must be tempered with the experience of practice. Because of the novel nature of the scheme the types of degradation seen are themselves novel and their subjective effects and their effects on interframe coding are not yet well understood.

By way of clarification of possibilities (d) and 0237229 above, there follows a description of such a differential coding method. When it has been decided that a block must be sub-divided, the value of a new point is required. The new point is tested to see whether its value can be approximated by interpolation from points already known; eg the interpolation value at E is midway between the values at B and C. If the interpolation is sufficiently accurate a "0" is transmitted. If it is not sufficiently accurate a "1" is transmitted, followed by the actual value, suitably coded. At present the preferred coding scheme is to transmit the difference between the actual value and the interpolated value. This normally gives a distribution of values with a small variance centred around zero, and therefore entropy coding can be used to reduce the average number of bits needed to be transmitted per sample value.

At the receiver it is simply necessary to calculate the interpolation for each sub-area transmitted, the sample values within that area, and enter the values into a frame store which, when the entire picture has been built up in this way, can then be read out.

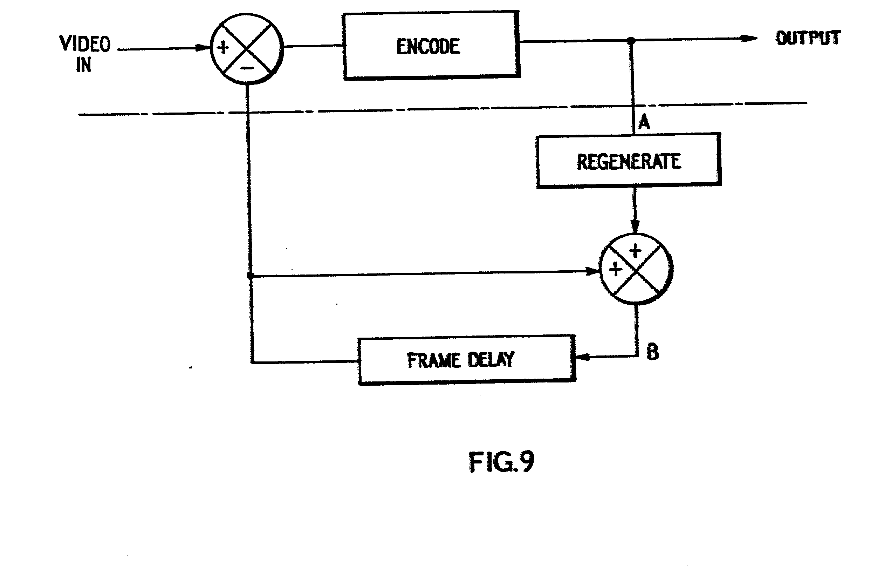

Figure 9 shows a block diagram of a transmitter for transmitting inter-frame differences using the proposed method, the encoder and regenerator operating as described above. That part of the circuit below the dotted line is in fact a receiver (input A, output B). At the transmitter, in fact, the interpolated signals could be extracted from the encoder rather than generated by a regenerator.

## CLAIMS

1    A    method   of   image   transmission   comprising repetitively:

(a)   generating an estimate of a picture area by interpolation from selected sample points thereof;

(b)   comparing  the  estimated  samples  with  the actual samples;

(c)   if the estimated and actual samples differ by less   than   a   threshold   criterion,   transmitting picture data in respect of the said selected sample points, and if they do not, notionally dividing the area under consideration into two or more sub-areas and subjecting each sub-area to steps (a), (b) and (c)  until  a  minimum  sub-area  size  is  reached characterised  in  that  each  division  is  into  two triangular areas.

2    A method according to Claim 1 in which the estimate is generated by a two-dimensional interpolation process based on the corner points of the area or sub-area.

3    A method according to claim 1 or 2 in which, in step (c),  the  notional  division  of  the  area  is  into  two substantially equal parts.

4    A method according to claim 3 comprising, for each triangular  area  which  is  to  be  divided,  generating estimates  for  the  pairs  of  sub-areas  resulting  from respective ones of the three possible divisions of that area, comparing the actual and estimated samples to obtain a measure of the difference therebetween in one or both sub-areas for each division, and selecting that division which corresponds to the smallest measure.

5    A method according to claim 1, 2, 3 or 4  in which the picture data transmitted in respect of the selected points after the first are the differences between the actual sample values of those points and the estimated values for those points.

6    A method according to any one of the preceding claims in which the data transmitted comprises a sequence of division codes each indicating whether or not the corresponding area is divided; each division code being followed by the codes corresponding to parts of the respective area.

7    A method according to any one of the preceding claims in which the said samples represent the differences between samples of the picture to be transmitted and those of a previously transmitted picture.

8    An apparatus for image transmission comprising interpolation means for generating an estimate of a picture area based on a subset of its samples, means for comparing the estimate with the actual sample values, and means arranged in dependence on whether the comparison indicates a difference of more or less than a threshold (a) to select the subset of samples for transmission or (b) to notionally divide the picture area into two or more sub-areas and to process each sub-area in like manner, characterised in that each division is into two triangular areas.

9    An apparatus according to claim 8 in which the estimate is generated by a two-dimensional interpolation process based on the corner points of the area or sub-area.

10    An apparatus according to claim 8 or 9 in which, in step (c), the notional division of the area is into four substantially equal parts.

0237229

11   An apparatus according to claim 10 arranged for each triangular area which is to be divided, generating estimates for the pairs of sub-areas resulting from respective ones of the three possible divisions of that area, comparing the actual and estimated samples to obtain a measure of the difference therebetween in one or both sub-areas for each division, and selecting that division which corresponds to the smallest measure.

12   An apparatus according to of claim 7, 8, 9, 10 or 11 in which the picture data transmitted in respect of the selected points after the first are the differences between the actual sample values of those points and the estimated values for those points.

13   An apparatus according to any one of claims 8 to 12 in which the data transmitted comprises a sequence of division codes each indicating whether or not the corresponding area is divided; each division code being followed by the codes corresponding to parts of the respective area.

14   An apparatus for image transmission comprising means for generating differences betweeen current image sample values and sample values of a previously transmitted image, comprising apparatus according to any one of claims 8 to 13 for encoding the said differences.

15   A decoder for receiving an image encoded by the method of claim 1, comprising a frame store, processing means arranged to compute from the received division codes the addresses of image points in respect of which data is transmitted and to interpolate values for the remaining points.

FIG.1

FIG.2

FIG.3

FIG.4

FIG. 5

VIDEO IN → [D to A] → DATA / ADDRESS → [FRAME STORE] → [PROCESSOR] → [OUTPUT PORT] → DATA OUT

10   12   14   16

**FIG.6**

DATA IN → [INPUT PORT] → [PROCESSOR] → DATA / DATA / ADDRESS → [FRAME STORE] → DATA → [D to A] → VIDEO OUT

20   22   24   26

ADDRESS

**FIG.7**

0237229

```
                    ┌─────────────────────────────────┐
                    │  GENERATE 3 CORNER ADDRESSES    │
                    └─────────────────────────────────┘
                                    │
                    ┌─────────────────────────────────┐
                    │  PUSH CORNER ADDRESSES ON STACK │
                    └─────────────────────────────────┘
                                    │
                    ┌─────────────────────────────────┐
                    │  RECEIVE AND STORE CORNER SAMPLES│
                    └─────────────────────────────────┘
```

ADDRESS ON STACK ? — NO → STOP

YES

PULL ADDRESSES OFF STACK

RECEIVE DIVISION CODE

NO ← CODE =00 ? → YES

GENERATE FROM CODE CORNER ADDRESSES OF SUB-AREAS

INTERPOLATE

PUSH ON STACK

ENTER RESULTS IN STORE

RECEIVE AND STORE ADDITIONAL CORNER SAMPLES

FIG.8

FIG.9

0237229

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PROCEEDINGS OF THE IEEE, vol. 68, no. 3, March 1980, pages 366-406, IEEE, New York, US; A.N. NETRAVALI et al.: "Picture coding: a review" * Page 397, left-hand column, lines 37-43 * | 1 | H 04 N 7/137 |

TECHNICAL FIELDS
SEARCHED (Int Cl 4)

H 04 N 7/00
H 04 N 1/00

The present search report has been drawn up for all claims

| Place of search | Date of completion of the search | Examiner |
|---|---|---|
| THE HAGUE | 29-05-1987 | YVONNET J.W. |